# EUROPEAN PATENT SPECIFICATION

(11) **EP 4 368 464 B1**
(45) Date of publication and mention of the grant of the patent: **20.08.2025**
(21) Application number: 23184119.8
(22) Date of filing: 07.07.2023
(51) Int. Cl.: B60W 10/06, B60W 10/184, B60W 30/16, B60W 30/18, B60W 50/08

(54) **DRIVING ASSISTANCE APPARATUS AND VEHICLE**
FAHRASSISTENZVORRICHTUNG UND FAHRZEUG
APPAREIL D'AIDE À LA CONDUITE ET VÉHICULE

(30) Priority: 09.11.2022 JP 2022179594
(43) Date of publication of application: 15.05.2024
(73) Proprietor: Suzuki Motor Corporation, Hamamatsu-shi, Shizuoka 432-8611 (JP)
(72) Inventor: FUKASAWA, Naoki, HAMAMATSU-SHI, 432-8611 (JP); EBATA, Tatsuro, HAMAMATSU-SHI, 432-8611 (JP)
(74) Representative: Plasseraud IP

(56) References cited:
- WO-A2-2015/075519
- US-A1- 2007 032 913
- US-A1- 2015 217 769
- US-A1- 2016 046 287
- US-A1- 2016 185 350

## Description

### BACKGROUND OF THE INVENTION

### Field of the Invention

The present invention relates to a driving assistance apparatus.

### Description of the Related Art

Many of the vehicles to be manufactured in recent years are provided with an adaptive cruise control (ACC) function. The adaptive cruise control assists the driver in driving the vehicle by automatically accelerating or decelerating the vehicle within a preset vehicle speed. Hereinafter, the adaptive cruise control is abbreviated as the ACC. The ACC is activated in response to switch-on of an ACC switch by the driver after starting an engine with an ignition. During the traveling, the ACC starts operation in response to switch-on of the ACC switch or press of an accelerator pedal, and is temporarily stopped (i.e., deactivated) in response to press of a brake pedal by the driver. Under the ACC, traveling of the vehicle is controlled in a plurality of traveling modes that differ depending on presence or absence of a preceding vehicle to be detected by various in-vehicle sensors. When the preceding vehicle is detected, the vehicle follows the preceding vehicle while maintaining a predetermined inter-vehicular distance from the preceding vehicle under the ACC. When no preceding vehicle is detected, the vehicle is accelerated or decelerated to the preset vehicle speed under the ACC. In the conventional technology, the ACC is subject to be used on exclusive roads for automobiles such as an expressway. Thus, in the case of the conventional vehicles, the use of the ACC is recommended only in a normal mode suitable for traveling on the exclusive roads for automobiles.
[Patent Document 1] JP 2008-168722 A

Furthermore, US 2007/032913, US 2015/217769, and WO 2015/075519 disclose methods and systems for controlling vehicle moding in response to a variety of driving conditions such as a wheel slip event or the detection of an obstacle. However, due to advances in automatic driving technology in recent years, the use of the ACC on general roads is expected. Accordingly, the ACC is now required to adapt to preferences of the driver and road surface conditions such as a snowy road and a muddy road.

### SUMMARY OF THE INVENTION

In view of the above-described circumstances, an object of the present invention is to provide a driving assistance apparatus and a vehicle, each of which can activate: adaptive cruise control responding to preferences of the driver; and adaptive cruise control conforming to road surface conditions of general roads such as a snowy road and a muddy road in addition to an expressway with stable road surface conditions.

To achieve the above object, the invention is defined in the independent claims. Preferable embodiements are defined by the dependent claims.

### EFFECTS OF THE INVENTION

The present invention provides a driving assistance apparatus and a vehicle, each of which can activate: adaptive cruise control responding to preferences of the driver; and adaptive cruise control conforming to road surface conditions of general roads such as a snowy road and a muddy road in addition to an expressway with stable road surface conditions.

### BRIEF DESCRIPTION OF THE DRAWINGS

In the accompanying drawings:
Fig. 1 is a schematic configuration diagram of a vehicle in which a driving assistance apparatus according to one embodiment is installed;
Fig. 2 is an outline of a peripheral portion of an instrument panel as viewed from a driver's seat;
Fig. 3 is a table illustrating ACC conditions and TC conditions, both of which are defined for each traveling mode;
Fig. 4 is a graph illustrating relationship between time and engine torque in each traveling mode; and
Fig. 5 is a flowchart illustrating aspects of activation and temporary prohibition of adaptive cruise control to be performed by an adaptive cruise controller.

### DETAILED DESCRIPTION

Hereinbelow, embodiments of the present invention will be described by referring to the accompanying drawings.

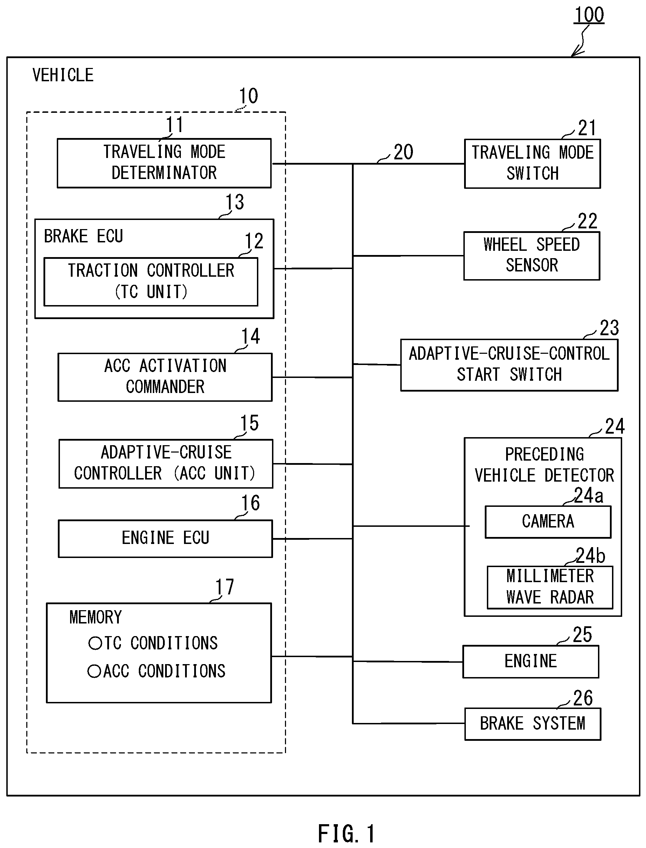

Fig. 1 is a schematic configuration diagram of a vehicle 100 in which a driving assistance apparatus 10 according to one embodiment is installed.

The driving assistance apparatus 10 is a driving automation system that assists a driver in driving the vehicle 100 by timely performing adaptive cruise control (ACC) and traction control (TC) of its driving wheels on the vehicle 100. The driving assistance means that the driving automation system limitedly and continuously performs either one of: steering of the vehicle 100; and acceleration or deceleration, including start and stop, of the vehicle 100.

When a preceding vehicle is traveling, the ACC brings the vehicle 100 closer to the preceding vehicle to a predetermined distance, and then automatically accelerates or decelerates the vehicle 100 within a preset vehicle speed range for maintaining this predetermined distance so as to cause the vehicle 100 to follow the preceding vehicle 100. The ACC allows the driver to drive the vehicle 100 without pressing the accelerator pedal or the brake pedal unless necessary.

The traction control system has a function of controlling rotation of the driving wheels to prevent slip, for example, spinning of the driving wheels. The traction control system enables adequate driving force and maneuverability in situations where the driving wheels are prone to slip.

Next, details of the driving assistance apparatus 10 will be described by using Fig. 1.

The driving assistance apparatus 10 includes: a traveling mode determinator 11; a brake ECU 13 provided with a traction controller 12 (hereinafter referred to as the TC controller 12); an adaptive-cruise-control activation commander 14 (hereinafter referred to as the ACC activation commander 14); an adaptive-cruise controller 15; an engine ECU 16; and a memory 17.

The driving assistance apparatus 10 is connected via an in-vehicle network 20 of the vehicle 100 to: a traveling mode switch 21; a wheel speed sensor 22; an adaptive-cruise-control start switch 23 (hereinafter referred to as the ACC start switch 23); a preceding-vehicle detector 24; an engine 25; and a brake system 26.

The traveling mode determinator 11 determines a traveling mode, selected among a plurality of traveling modes by the driver's operation on the traveling mode switch 21, as the traveling mode to be executed by the driving assistance apparatus 10.

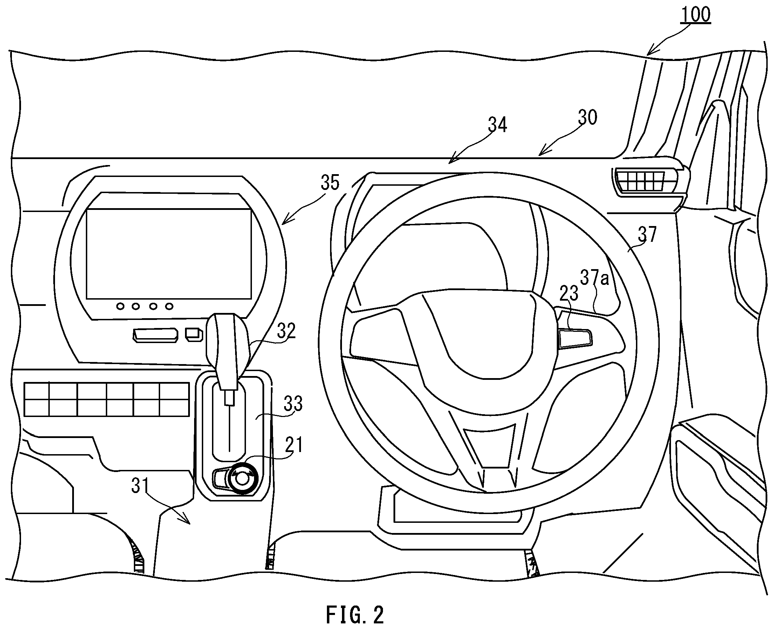

Fig. 2 is an outline of a peripheral portion of an instrument panel 30 as viewed from the driver's seat. The driver's seat is separated from the passenger's seat by a console box 31. A console upper panel 33 is provided on the front half of the top surface of this console box 31. A shift lever 32 is inserted into the console upper panel 33. This console upper panel 33 has the traveling mode switch 21 configured as a dial switch or a push switch, for example. The driver switches the traveling mode by operating the traveling mode switch 21 while the vehicle 100 is traveling or before the vehicle 100 starts traveling but after an ignition switch is turned on. To switch the traveling mode means to select one traveling mode from the plurality of traveling modes. The instrument panel 30A is provide with a meter panel 34 and a navigation panel 35, either or both of which displays the selected traveling mode.

The traveling modes selectable via a traveling mode selection function are, for example, a snow mode (i.e., second mode), a lock mode (i.e., third mode), and a sport mode (i.e., fourth mode). The so-called initial traveling mode in which none of the second to fourth traveling modes are selected is the normal mode (i.e., first mode). Details of each traveling mode will be described below.

Return to Fig. 1, the description of the vehicle 100 and the driving assistance apparatus 10 will be continued.

The wheel speed sensor 22 monitors the rotational speed of the wheels so as to detect slip such as spinning of the driving wheels.

When slip detected by the wheel speed sensor 22 exceeds a predetermined intervention threshold, the brake ECU 13 reduces the slip of the driving wheels with the function of the traction controller 12. The brake ECU 13 controls the brake system 26 and controls the engine 25 via the engine ECU 16. The brake ECU 13 reduces the slip of the driving wheels by executing at least one of the following actions: reducing the torque of the engine 25; and applying brake via the brake system 26. The torque of the engine 25 is sometimes simply referred to as engine torque. The ECU is an abbreviation for Electronic Control Unit, which is composed of a CPU, a ROM, and a RAM. The engine ECU 16 electronically controls output of the engine 25. Similarly, the brake ECU 13 electronically controls the operation of the brake system 26. The engine ECU 16, the memory 17 storing traction control conditions (hereinafter referred to as the TC conditions), and the brake ECU 13 provided with the traction controller 12 for executing the function of the traction control system are called a traction control system (TCS) as a whole.

The traction control by the traction controller 12 is performed on the basis of TC conditions that are defined for each traveling mode. In addition, each set of TC conditions defined for each traveling mode includes: its control aspect; and an intervention threshold that defines an intervention timing of the traction controller 12.

The ACC activation commander 14 sends a command to the adaptive-cruise controller 15 to activate the adaptive cruise control in response to a press of the ACC start switch 23 by the driver. The ACC start switch 23 is provided on a pillar portion 37a of a steering wheel 37 as shown in Fig. 2, for example. When the driver wants to activate the ACC, the driver presses the ACC start switch 23 while the vehicle 100 is traveling or before traveling but after an ignition switch is turned on. The ACC starts following the preceding vehicle when the traveling speed exceeds a preset vehicle speed threshold. This vehicle speed threshold may be set to 0 km/h. In this case, the adaptive-cruise controller 15 also controls start and stop of the vehicle 100.

When the vehicle speed exceeds the vehicle speed threshold after output of the activation command by the ACC activation commander 14, the adaptive-cruise controller 15 performs the ACC by: controlling the engine 25 via the engine ECU 16; and controlling the brake system 26 via the brake ECU 13. The ACC executes a plurality of different traveling modes depending on presence or absence of a preceding vehicle to be detected by the preceding-vehicle detector 24 that is composed of a camera 24a and a millimeter wave radar 24b, for example.

When the preceding-vehicle detector 24 detects a preceding vehicle, the vehicle 100 follows the detected preceding vehicle while maintaining a predetermined inter-vehicular distance under the ACC executed by the adaptive-cruise controller 15. This predetermined inter-vehicular distance can be changed, for example, in four steps by the driver operating a sub-switch of the ACC start switch 23. The preceding-vehicle detector 24 monitors the inter-vehicular distance and speed difference between the preceding vehicle and the own vehicle (100). When the preceding-vehicle detector 24 does not detect any preceding vehicle, the adaptive-cruise controller 15 accelerates or decelerates the vehicle 100 to a preset vehicle speed. This preset vehicle speed can also be changed by the driver operating the sub-switch of the ACC start switch 23.

The driving assistance apparatus 10 according to the present embodiment has a plurality of ACC conditions. Each ACC condition defines the control aspect of the ACC corresponding to each traveling mode described above.

The adaptive-cruise controller 15 performs the adaptive cruise control of the vehicle 100 in accordance with the ACC conditions corresponding to the selected traveling mode. When the traveling mode is switched after output of the activation command of the adaptive cruise control, the adaptive-cruise controller 15 switches the vehicle 100 to adaptive cruise control that conforms to the ACC conditions corresponding to the updated traveling mode after switch.

The respective components of the driving assistance apparatus 10 can be configured as a computer that includes: a processor such as a CPU; a ROM (Read Only Memory); a RAM (Random Access Memory); and/or a storage device such as an HDD (Hard Disk Drive).

In this case, the respective functions of the traction controller 12, the traveling mode determinator 11, the ACC activation commander 14, and the adaptive-cruise controller 15 integrally included in the driving assistance apparatus 10 can be implemented by causing the processor to execute predetermined programs stored in the storage device.

Instead of the above-described software processing, the respective functions of the traction controller 12, the traveling mode determinator 11, the ACC activation commander 14, and the adaptive-cruise controller 15 may be implemented by hardware such as an Application Specific Integration Circuit (ASIC) and a Field-Programmable Gate Array (FPGA).

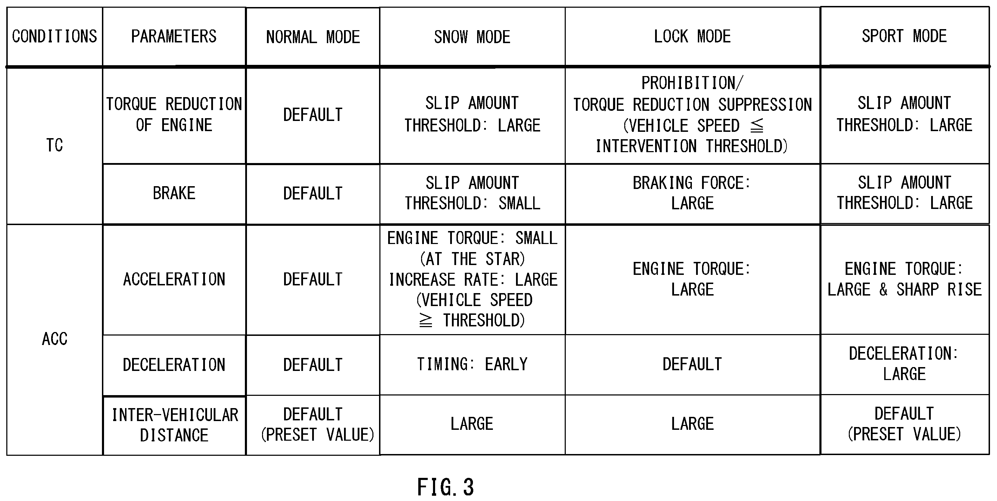

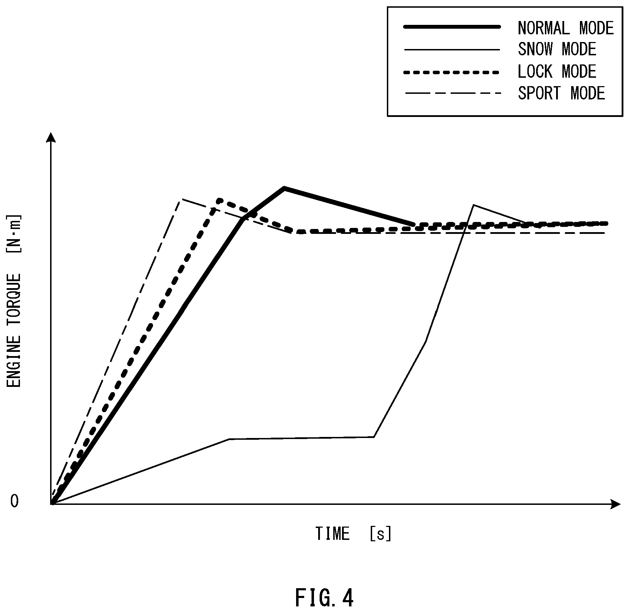

Next, each traveling mode will be described by using Fig. 3 and Fig. 4.

Fig. 3 is a table illustrating the ACC conditions and the TC conditions, both of which are defined for each traveling mode.

Fig. 4 is a graph illustrating relationship between time and engine torque in each traveling mode.

The memory 17 stores the TC conditions for each traveling mode and the ACC conditions for each traveling mode, as shown in Fig. 1 and Fig. 3. The ACC conditions define at least: acceleration and deceleration of the vehicle 100 to be controlled by the engine 25 and the brake system 26; the inter-vehicular distance from the preceding vehicle; and a timing of each control action. The TC conditions define the intervention timing in addition to reduction amount of engine torque and braking force. The intervention timing is defined by the intervention threshold that is set for each slip amount. In detail, the intervention threshold is set individually for: the slip amount at which the engine control by the traction control starts (i.e., the control of reduction amount of engine torque starts); and the slip amount at which the brake control starts (i.e., the braking force is applied).

The adaptive-cruise controller 15 and the traction controller 12 independently intervene in both the control of the engine 25 and the control of the brake system 26 in such a manner that the adaptive-cruise controller 15 acts on the basis of the ACC conditions corresponding to the selected traveling mode and the traction controller 12 acts on the basis of the TC conditions corresponding to the selected traveling mode. As a result, when the ACC and the TC are simultaneously activated, the response of the brake system 26 and the response of the engine 25 with respect to the driver's driving operation are different in each traveling mode.

The TC conditions and the ACC conditions may be stored in a storage device (not shown) in the brake ECU 13, for example. In other words, the memory 17 may be provided anywhere in the driving assistance apparatus 10.

Next, each traveling mode will be described in detail.

### (Normal Mode, i.e., First Mode)

The normal mode is a traveling mode suitable for driving on a dry paved road. As described above, the normal mode is a default or initial traveling mode when the driver does not select the traveling mode. The normal mode is intended for traveling on an exclusive road for automobiles such as an expressway. Thus, the normal mode has been conventionally assumed as a traveling mode suitable for activating the ACC.

In the normal mode, at least one of the traction control amounts and the intervention timing (i.e., intervention threshold) by the TCS is defined as a TC condition. The respective parameters of the TC conditions and the ACC conditions in the normal mode are set as initial values (default values). In other words, as shown in Fig. 3, the set intervention threshold of the slip amount and the traction control amount in the TC conditions, are default values, while the engine torque and the braking force in the ACC conditions are also default values.

The traction controller 12 does not necessarily need to control both the engine torque and the braking force. In other words, the traction controller 12 may perform the traction control by controlling only one of the engine torque and the braking force. Similarly, the adaptive-cruise controller 15 may control the traveling at the preset vehicle speed and control of the inter-vehicular distance by controlling only one of the engine torque and the braking force. In Fig. 4, the normal mode is represented by the thick solid line.

### (Snow Mode, i.e., Second Mode)

The snow mode is a traveling mode suitable for driving on a slippery road such as an icy road and a snowy road. In the snow mode, it is necessary to prevent the wheels from slipping, especially at the time of starting the vehicle 100. Thus, as shown in Fig. 3, under the ACC conditions, the engine torque at the start in the snow mode is set smaller than that in the normal mode.

After the vehicle speed increases and reaches to the extent that the risk of slip is sufficiently low, it is required to prevent delay in following the preceding vehicle. For this reason, in the ACC conditions, when the vehicle speed reaches a predetermined second vehicle-speed threshold or faster, an increase rate of the engine torque in the snow mode is set larger than the increase rate of the engine torque in the normal mode.

As a result, as indicated by the thin solid line in the graph of Fig. 4, the engine torque in the snow mode increases more slowly than the engine torque in the normal mode, and then rises sharply to the same level as in the other traveling modes. In this manner, under the state where it can be determined that a certain vehicle speed is available and the vehicle 100 can be accelerated stably, the adaptive-cruise controller 15 increases the acceleration and thereby speeds up following of the preceding vehicle. Hence, even the driver who is unfamiliar with driving on a slippery road can strongly press the accelerator pedal. In addition, when the driver operates the accelerator in the snow mode, since the vehicle 100 is started from a small engine torque, the occurrence of wheel slip can be reduced. Further, even without the driver's operation, ACC increases a jerk (i.e., rate of change in acceleration with respect to time) when the vehicle 100 reaches a certain stable speed, and consequently, the ability to follow the preceding vehicle is improved.

Slippery roads increase the risk that the vehicle 100 will collide with the preceding vehicle. Thus, in the ACC conditions, the inter-vehicular distance between the preceding vehicle and the own vehicle 100 in the snow mode is set larger than that in the normal mode. For the same reason, in the ACC conditions, the timing at which the brake system 26 applies the brakes in the snow mode is set earlier than that in normal mode. In the snow mode, it is conceivable or assumed that the accelerator pedal is pressed hard by the driver who trusts the function of the traction control system in the snow mode. In this case, there is a risk that the ACC stops due to the driver's operation on the accelerator pedal, and consequently the vehicle 100 may accelerates more than the driver expected. Even in such a case, safety in the snow mode is ensured because the inter-vehicular distance between the preceding vehicle and the own vehicle 100 is set as a longer distance.

In consideration of the slippery road surface, in the TC conditions, the intervention threshold of the slip amount in snow mode is set to be a value smaller than the default value of the intervention threshold. As a result, the traction controller 12 can detect slight wheel slip and activate the TCS early. Hence, the driving assistance apparatus 10 can prevent reduction in driving force and maneuverability (i.e., controllability) due to slip on a slippery road surface so as to enable the driver to drive the vehicle 100 safely and smoothly despite such a disadvantageous road condition.

The driving assistance apparatus 10 may have a function of automatically switching to the snow mode without pressing the traveling mode switch 21 by the driver. For example, when the estimated frictional resistance value of the road surface is small, the traveling mode determinator 11 may automatically switch the traveling mode to the snow mode.

In the snow mode, the ACC conditions and the TC conditions are set to conform to the slippery road conditions in the above-described manner, and thus, the driver can drive the vehicle 100 with a sense of security even on a slippery road.

### (Lock Mode, i.e., Third Mode)

The lock mode (i.e., third mode) is a traveling mode suitable for freeing the vehicle 100 from a stuck state (i.e., stalled situation) on a muddy, sandy, or snowy road.

In the TC conditions, the braking force in the lock mode is set larger than the default value of the braking force. In addition, torque reduction of the engine 25 by the traction controller 12 is reduced or prohibited in the vehicle speed range equal to or slower than the predetermined vehicle speed. In the lock mode, because the braking force by the TCS is large and high engine torque is generated, it is excellent for freeing the vehicle from a stuck state.

In the ACC conditions, the engine torque at the time of start the vehicle in the lock mode is set larger than the default value in the normal mode. Since the engine torque is made larger than the default value at the time of start, slip detection becomes earlier even during activation of the ACC. Thus, the ACC in the lock mode can perform brake control at the earlier stage. From the viewpoint of preventing sudden acceleration at the time when freeing the vehicle from a rough road, the engine torque in the lock mode is set smaller than the engine torque in the sport mode. In particular, as indicated by the thick dashed line in the graph of Fig. 4, in the case when the ACC is activated at the start, the amount of the engine torque in the lock mode is set smaller than the engine torque in the sport mode. In this manner, sudden acceleration at the time of freeing the vehicle from a rough road is prevented, so the driver's fear can be eliminated.

In the ACC conditions in the lock mode, when a stuck state is detected while activating the ACC, it is preferred to set the engine torque to stepwisely increase from the initial value of the lock mode. By such setting, the driving assistance apparatus 10 does not give the driver a feeling of sudden acceleration even if the driver selects the lock mode in a completely unstuck situation.

When the vehicle 100 is determined to be stuck on the basis of output of the wheel speed sensor 22 and a predetermined time elapses from the stuck detection, it is desirable to stop activation of the ACC. Further, it is preferred that the adaptive-cruise controller 15 outputs an appropriate notification to prompt the driver to operate by himself/herself such that the control will be transferred to and performed by the driver's operation on the accelerator. This is because, when the vehicle 100 cannot be freed from the stuck state by the stepwise increase in the engine torque by the ACC, it is desirable that the driver attempts to free the vehicle by his/her own operation. When the driver takes the initiative in operating the vehicle 100, operation combing higher engine torque and aggressive braking may be performed. By transferring (i.e., entrusting) the operation to the driver in this case, the driver may perform operation to free the vehicle from the rough road without fear.

### (Sport Mode, i.e., Fourth Mode)

In the sport mode, the vehicle 100 is switched to, for example, four-wheel-drive more frequently, and thereby the sport mode makes it comfortable to drive on roads with many curves, such as a mountain road, where frequent steering operations are required. Additionally, the sport mode keeps the speed of the engine 25 at higher level. Thus, the sport mode is suitable for merging and overtaking on an expressway. The sport mode is a traveling mode designed to appeal to the driver's desire, such as strong acceleration and driving with a higher degree of freedom, by allowing a certain amount of slip. Thus, the ACC conditions and the TC conditions in the sport mode are set to enable driving that responds to the driver's preferences of such a driver even while the driving assistance is being activated by the ACC.

In the TC conditions, the intervention thresholds for both the brake control and the torque reduction of the engine 25 in the sport mode are set higher than the intervention thresholds in the normal mode. When the intervention threshold of the traction control is set high, the brake control is unlikely to intervene, allowing the sport mode to allow slip due to high acceleration of the ACC. In addition, the sport mode can prevent the engine torque from being reduced. Further, the sport mode makes it difficult for the TCS to intervene in the brake control, thereby reduces sound including noise and vibration, and can improves power consumption efficiency while improving startability.

In the ACC conditions, at least one of the amounts and the increase rate of the engine torque in the sport mode is set to a value larger than their default values. Under such setting, the sport mode can prevent the ACC from being interrupted by careless press of the accelerator pedal by the driver who desires a sense of acceleration. As a result, as indicated by the thin chain line in the graph of Fig. 4, the sport mode can maintain high acceleration even in the case of activating the ACC. In other words, the sport mode can give the driver a unique feeling of acceleration even in the case of activating the ACC.

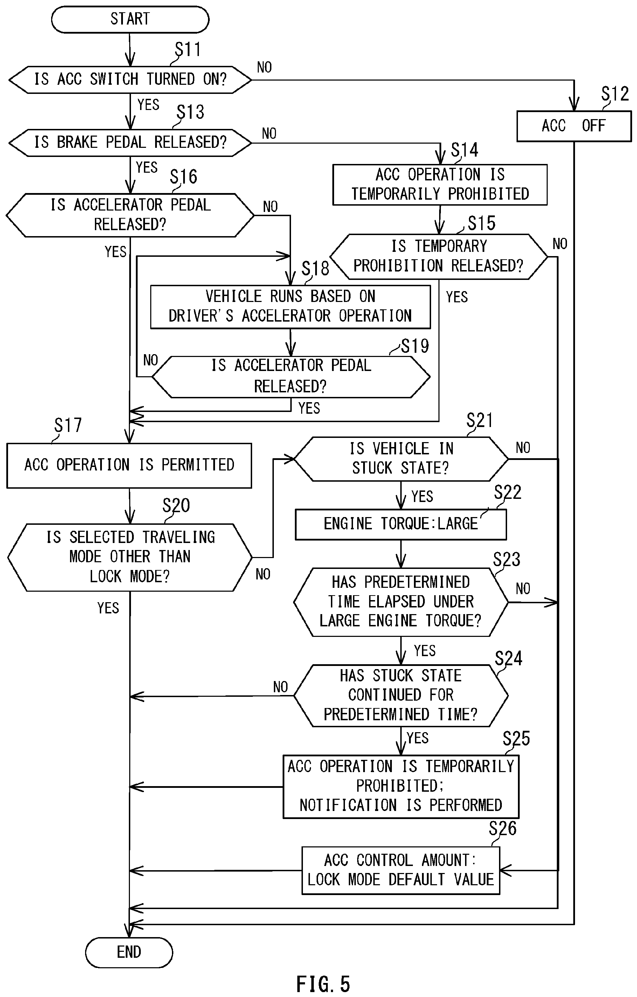

Next, the aspect of activation and temporary prohibition of the ACC by the adaptive-cruise controller 15 will be described by using the flowchart of Fig. 5.

First, as shown in Fig. 5, if the ACC start switch 23 is not turned ON, the adaptive-cruise controller 15 does not start. In other words, if the determination result in the step S11 is NO, the processing proceeds to END after the step S12. If the ACC start switch 23 is turned ON (YES in the step S11), the ACC enters the standby state and the processing proceeds to the step S13. When the driver presses the brake pedal (NO in the step S13), the processing proceeds to the step S14 in which operation for traveling of the ACC is temporarily prohibited. When the temporary prohibition of the ACC operation is not released (NO in the step S15), the ACC operation will not start (END). In other words, unless the temporary prohibition of the ACC operation is released, the traveling speed of the vehicle 100 is controlled only by the driver's driving operation.

When the temporary prohibition of the ACC operation is released (YES in the step S15), the processing proceeds to the step S17 in which the ACC operation is permitted. When the ACC operation is permitted in the step S17, the ACC operation is started when the vehicle 100 reaches a predetermined traveling speed.

Returning to the step S13, When the driver does not press the brake pedal (YES in the step 13), the processing proceeds to the step S16 in which the adaptive-cruise controller 15 checks whether the driver pressed the accelerator pedal or not.

When the accelerator pedal is pressed by the driver (NO in the step S16), the processing proceeds to the step S18 in which the ACC operation is temporarily prohibited and the vehicle continues traveling on the basis of the driver's accelerator operation. While the accelerator pedal is being pressed by the driver (NO in the step S19), the control of the traveling speed by the driver's accelerator operation is continued. When the driver stops pressing the accelerator pedal (YES in the step S19), the processing proceeds to the step S17 in which the ACC operation is permitted.

When the selected traveling mode is other than the lock mode (YES in the step S20), the ACC operation is continued (END after the step S20). In other words, When the traveling speed of the vehicle 100 reaches or exceeds a predetermined speed, the ACC operation is started.

When the lock mode is selected and a stuck state occurs (YES in the step S21 subsequent to the negative determination in the step S20), the processing proceeds to the step S22 in which the engine torque is set larger than the default value. Before a predetermined time elapses under the state where the engine torque is large (NO in the step S23), the ACC operation in the lock mode is started (END after step S26). At this time, the ACC is started with a lock mode initial value defined by the ACC conditions in the lock mode. When the predetermined time elapses under the state where the engine torque remains large (YES in the step S23), if the stuck state is released before the elapse of the predetermined time (NO in the step S24), permission of the ACC operation continues (END).

When the predetermined time under the state where the engine torque remains large (YES in the step S23), if the stuck state continues for the predetermined time (YES in the step S24), the processing proceeds to the step S25 in which the ACC operation is temporarily prohibited, and the driver assistance system 10 informs the driver of such is temporary prohibition by displaying a message on, for example, the meter panel (END after step S25).

When the stuck state does not occur (NO in the step S21), the processing proceeds to the step S26 in which the ACC operation is started with the lock mode initial value defined by the ACC conditions in the lock mode (END).

According to the above-described embodiments, each of the driving assistance apparatus 10 and the vehicle 100 can perform: the ACC that conforms to preferences of the driver; and the ACC that conforms to road surface conditions of general roads such as a snowy road and a muddy road in addition to an expressway with stable road surface conditions. Thus, the driving assistance apparatus 10 expands the driver's use range of the ACC. In addition, the driving assistance apparatus 10 may be applied to the control for automated driving.

For example, the selectable traveling modes differ depending on the vehicle model. For example, some vehicle models are provided with an economy mode that prioritizes fuel efficiency.

### REFERENCE SIGNS LIST

10 driving assistance apparatus
11 traveling mode determinator
12 traction controller (TC unit)
13 brake ECU
14 adaptive-cruise-control activation commander (ACC activation commander)
15 adaptive-cruise controller (ACC unit)
16 engine ECU
17 memory
21 traveling mode switch
22 wheel speed sensor
23 adaptive-cruise-control start switch (ACC start switch)
24 (24a, 24b) preceding vehicle detector (camera, millimeter wave radar)
25 engine
26 brake system
30 instrument panel
31 console box
32 shift lever
33 console upper panel
34 meter panel
35 navigation panel
37 (37a) steering wheel (pillar portion)
100 vehicle

## Claims

1. A driving assistance apparatus (10) comprising:
a traveling mode determinator (11) configured to determine a traveling mode to be applied among a plurality of traveling modes in accordance with a selection mode by a driver of a vehicle;
a traction controller (12) configured to reduce slip of a driving wheel by controlling at least one of an engine and a brake system in accordance with a plurality of traction control conditions defined for each traveling mode, when slip amount of the driving wheel exceeds an intervention threshold; and
an adaptive cruise controller (15) configured to perform adaptive cruise control that causes the vehicle to follow a preceding vehicle in accordance with a plurality of adaptive cruise control conditions defined for each traveling mode,
wherein the plurality of traveling modes includes:
a first mode in which at least one of traction control amount and an intervention threshold of the slip amount defined in the traction control condition is a default value, and at least one of the engine torque and the braking force defined in the adaptive cruise control condition is a default value; and
at least one traveling mode that has the traction control condition different from the first mode,
wherein the at least one traveling mode comprises a plurality of traveling modes,
characterize in that the plurality of traveling modes include a second mode in which the intervention threshold of the slip amount with respect to the braking force in the traction control condition is set smaller than that in the first mode; and
wherein, when the traveling mode is changed, the adaptive cruise controller (15) performs the adaptive cruise control by changing an adaptive cruise control condition included in the plurality of adaptive cruise control conditions so as to correspond to the traveling mode after change, the adaptive cruise control condition of the second mode is set in such a manner that the engine torque at a start is set smaller than that in the first mode, and an increase rate of the engine torque is set larger than that in the first mode when a vehicle speed equal to or faster than a predetermined speed.

2. The driving assistance apparatus (10) according to claim 1, wherein, in the adaptive cruise control condition of the second mode,
an inter-vehicular distance between the vehicle and the preceding vehicle is set larger than that in the first mode and
an activation timing of the brake system of the vehicle is set earlier than that in the first mode.

3. A driving assistance apparatus (10) comprising:
a traveling mode determinator (11) configured to determine a traveling mode to be applied among a plurality of traveling modes in accordance with a selection mode by a driver of a vehicle;
a traction controller (12) configured to reduce slip of a driving wheel by controlling at least one of an engine and a brake system in accordance with a plurality of traction control conditions defined for each traveling mode, when slip amount of the driving wheel exceeds an intervention threshold; and
an adaptive cruise controller (15) configured to perform adaptive cruise control that causes the vehicle to follow a preceding vehicle in accordance with a plurality of adaptive cruise control conditions defined for each traveling mode,
wherein the plurality of traveling modes includes:
a first mode in which at least one of traction control amount and an intervention threshold of the slip amount defined in the traction control condition is a default value, and at least one of the engine torque and the braking force defined in the adaptive cruise control condition is a default value; and
at least one traveling mode that has the traction control condition different from the first mode,
wherein the at least one traveling mode comprises a plurality of traveling modes,
**characterized in that** the plurality of traveling modes include a third mode in which torque reduction of the engine by the traction controller is reduced or prohibited and the braking force of the traction control condition is set larger than that in the first mode; and
wherein, when the traveling mode is changed, the adaptive cruise controller (15) performs the adaptive cruise control by changing an adaptive cruise control condition included in the plurality of adaptive cruise control conditions so as to correspond to the traveling mode after change, the adaptive cruise control condition of the third mode is set in such a manner that the engine torque at the start in the adaptive cruise control condition in the third mode is set larger than that in the first mode.

4. The driving assistance apparatus (10) according to claim 3, wherein,
when a stuck state is detected in the adaptive cruise control in the third mode, the engine torque is stepwisely increased, and
when the detection of the stuck state continues for a predetermined time, the adaptive cruise control is stopped and a notification is issued to prompt the driver to perform driving operation.

5. The driving assistance apparatus (10) according to any one of claim 3 or claim 4, wherein:
the engine torque at the start in the adaptive cruise control condition in the third mode is set larger than that in the first mode;
the at least one traveling mode comprises a plurality of traveling modes, the plurality of traveling modes include a fourth mode in which the intervention threshold of the slip amount of the traction control condition is set larger than that in the first mode; and
amount of the engine torque at the start in the adaptive cruise control condition in the third mode is set smaller than that in the fourth mode.

6. A driving assistance apparatus (10) comprising:
a traveling mode determinator (11) configured to determine a traveling mode to be applied among a plurality of traveling modes in accordance with a selection mode by a driver of a vehicle ;
a traction controller (12) configured to reduce slip of a driving wheel by controlling at least one of an engine and a brake system in accordance with a plurality of traction control conditions defined for each traveling mode, when slip amount of the driving wheel exceeds an intervention threshold; and
an adaptive cruise controller (15) configured to perform adaptive cruise control that causes the vehicle to follow a preceding vehicle in accordance with a plurality of adaptive cruise control conditions defined for each traveling mode,
wherein the plurality of traveling modes includes:
a first mode in which at least one of traction control amount and an intervention threshold of the slip amount defined in the traction control condition is a default value, and at least one of the engine torque and the braking force defined in the adaptive cruise control condition is a default value; and
at least one traveling mode that has the traction control condition different from the first mode,
wherein the at least one traveling mode comprises a plurality of traveling modes,
**characterized in that** the plurality of traveling modes include a fourth mode in which the intervention threshold of the slip amount of the traction control condition is set larger than that in the first mode; and
wherein, when the traveling mode is changed, the adaptive cruise controller performs the adaptive cruise control by changing an adaptive cruise control condition included in the plurality of adaptive cruise control conditions so as to correspond to the traveling mode after change, the adaptive cruise control condition of the fourth mode is set in such a manner that at least one of amount and an increase rate of the engine torque is set larger than that in the first mode.

## Patentansprüche

1. Fahrunterstützungsvorrichtung (10), umfassend:
eine Fahrmodus-Bestimmungseinheit (11), welche dazu eingerichtet ist, in Übereinstimmung mit einem Auswahlmodus durch einen Fahrer eines Fahrzeugs einen Fahrmodus zu bestimmen, welcher unter einer Mehrzahl von Fahrmodi anzuwenden ist;
eine Beförderung-Steuereinheit (12), welche dazu eingerichtet ist, in Übereinstimmung mit einer Mehrzahl von Beförderung-Steuerbedingungen, welche für jeden Fahrmodus definiert sind, ein Rutschen eines Lenkrads durch Steuern wenigstens eines aus einem Motor und einem Bremssystem zu reduzieren, wenn ein Rutschbetrag des Lenkrads einen Eingriff-Schwellenwert überschreitet; und
eine adaptive Geschwindigkeit-Steuereinheit (15), welche dazu eingerichtet ist, in Übereinstimmung mit einer Mehrzahl adaptiver Geschwindigkeit-Steuerbedingungen, welche für jeden Fahrmodus definiert sind, eine adaptive Geschwindigkeitssteuerung durchzuführen, welche das Fahrzeug dazu veranlasst, einem vorangehenden Fahrzeug zu folgen,
wobei die Mehrzahl von Fahrmodi umfasst:
einen ersten Modus, in welchem wenigstens einer aus einem Beförderung-Steuerbetrag und einem Eingriff-Schwellenwert des Rutschbetrags, welche in der Beförderung-Steuerbedingung definiert sind, ein Standardwert ist und wenigstens eines aus dem Motordrehmoment und der Bremskraft, welche in der adaptiven Geschwindigkeit-Steuerbedingung definiert sind, ein Standardwert ist; und
wenigstens einen Fahrmodus, welcher die zu dem ersten Modus unterschiedliche Beförderung-Steuerbedingung aufweist,
wobei der wenigstens eine Fahrmodus eine Mehrzahl von Fahrmodi umfasst,
**dadurch gekennzeichnet, dass** die Mehrzahl von Fahrmodi einen zweiten Modus umfasst, in welchem der Eingriff-Schwellenwert des Rutschbetrags in Bezug auf die Bremskraft in der Beförderung-Steuerbedingung kleiner als der in dem ersten Modus festgelegt ist; und
wobei, wenn sich der Fahrmodus ändert, die adaptive Geschwindigkeit-Steuereinheit (15) die adaptive Geschwindigkeitssteuerung durch Ändern einer adaptiven Geschwindigkeit-Steuerbedingung durchführt, welche in der Mehrzahl adaptiver Geschwindigkeit-Steuerbedingungen umfasst ist, um dem Fahrmodus nach einer Änderung zu entsprechen, wobei die adaptive Geschwindigkeit-Steuerbedingung des zweiten Modus derart festgelegt ist, dass das Motordrehmoment bei einem Start kleiner als das in dem ersten Modus festgelegt ist, und dass eine Anstiegsrate des Motordrehmoments größer als die in dem ersten Modus festgelegt ist, wenn eine Fahrzeuggeschwindigkeit gleich wie oder schneller als eine vorbestimmte Geschwindigkeit ist.

2. Fahrunterstützungsvorrichtung (10) nach Anspruch 1, wobei, in der adaptiven Geschwindigkeit-Steuerbedingung des zweiten Modus,
ein Fahrzeug-Zwischenabstand zwischen dem Fahrzeug und dem vorangehenden Fahrzeug größer als der in dem ersten Modus festgelegt ist und
ein Aktivierungszeitpunkt des Bremssystems des Fahrzeugs früher als der in dem ersten Modus festgelegt ist.

3. Fahrunterstützungsvorrichtung (10), umfassend:
eine Fahrmodus-Bestimmungseinheit (11), welche dazu eingerichtet ist, in Übereinstimmung mit einem Auswahlmodus durch einen Fahrer eines Fahrzeugs einen Fahrmodus zu bestimmen, welcher unter einer Mehrzahl von Fahrmodi anzuwenden ist;
eine Beförderung-Steuereinheit (12), welche dazu eingerichtet ist, in Übereinstimmung mit einer Mehrzahl von Beförderung-Steuerbedingungen, welche für jeden Fahrmodus definiert sind, ein Rutschen eines Lenkrads durch Steuern wenigstens eines aus einem Motor und einem Bremssystem zu reduzieren, wenn ein Rutschbetrag des Lenkrads einen Eingriff-Schwellenwert überschreitet; und
eine adaptive Geschwindigkeit-Steuereinheit (15), welche dazu eingerichtet ist, in Übereinstimmung mit einer Mehrzahl adaptiver Geschwindigkeit-Steuerbedingungen, welche für jeden Fahrmodus definiert sind, eine adaptive Geschwindigkeitssteuerung durchzuführen, welche das Fahrzeug dazu veranlasst, einem vorangehenden Fahrzeug zu folgen,
wobei die Mehrzahl von Fahrmodi umfasst:
einen ersten Modus, in welchem wenigstens einer aus einem Beförderung-Steuerbetrag und einem Eingriff-Schwellenwert des Rutschbetrags, welche in der Beförderung-Steuerbedingung definiert sind, ein Standardwert ist und wenigstens eines aus dem Motordrehmoment und der Bremskraft, welche in der adaptiven Geschwindigkeit-Steuerbedingung definiert sind, ein Standardwert ist; und
wenigstens einen Fahrmodus, welcher die zu dem ersten Modus unterschiedliche Beförderung-Steuerbedingung aufweist,
wobei der wenigstens eine Fahrmodus eine Mehrzahl von Fahrmodi umfasst,
**dadurch gekennzeichnet, dass** die Mehrzahl von Fahrmodi einen dritten Modus umfasst, in welchem eine Drehmomentreduzierung Motors durch die Beförderung-Steuereinheit reduziert oder unterbunden ist und die Bremskraft der Beförderung-Steuerbedingung größer als die in dem ersten Modus festgelegt ist; und
wobei, wenn sich der Fahrmodus ändert, die adaptive Geschwindigkeit-Steuereinheit (15) die adaptive Geschwindigkeitssteuerung durch Ändern einer adaptiven Geschwindigkeit-Steuerbedingung durchführt, welche in der Mehrzahl adaptiver Geschwindigkeit-Steuerbedingungen umfasst ist, um dem Fahrmodus nach einer Änderung zu entsprechen, wobei die adaptive Geschwindigkeit-Steuerbedingung des dritten Modus derart festgelegt ist, dass das Motordrehmoment bei dem Start in der adaptiven Geschwindigkeit-Steuerbedingung in dem dritten Modus größer als das in dem ersten Modus festgelegt ist.

4. Fahrunterstützungsvorrichtung (10) nach Anspruch 3, wobei,
wenn ein steckengebliebener Zustand in der adaptiven Geschwindigkeitsteuerung in dem dritten Modus detektiert wird, das Motordrehmoment schrittweise erhöht wird, und
wenn die Detektion des steckengebliebenen Zustands für eine vorbestimmte Zeit anhält, die adaptive Geschwindigkeitssteuerung gestoppt wird und eine Benachrichtigung ausgegeben wird, um den Fahrer dazu aufzufordern, einen Fahrvorgang durchzuführen.

5. Fahrunterstützungsvorrichtung (10) nach Anspruch 3 oder Anspruch 4, wobei:
das Motordrehmoment in der adaptiven Geschwindigkeit-Steuerbedingung in dem dritten Modus zu Beginn größer als das in dem ersten Modus festgelegt ist,
der wenigstens eine Fahrmodus eine Mehrzahl von Fahrmodi umfasst, wobei die Mehrzahl von Fahrmodi einen vierten Modus umfasst, in welchem der Eingriff-Schwellenwert des Rutschbetrags der Beförderung-Steuerbedingung größer als der in dem ersten Modus festgelegt ist; und
ein Betrag des Motordrehmoments in der adaptiven Geschwindigkeit-Steuerbedingung in dem dritten Modus zu Beginn kleiner als der in dem vierten Modus festgelegt ist.

6. Fahrunterstützungsvorrichtung (10), umfassend:
eine Fahrmodus-Bestimmungseinheit (11), welche dazu eingerichtet ist, in Übereinstimmung mit einem Auswahlmodus durch einen Fahrer eines Fahrzeugs einen Fahrmodus zu bestimmen, welcher unter einer Mehrzahl von Fahrmodi anzuwenden ist;
eine Beförderung-Steuereinheit (12), welche dazu eingerichtet ist, in Übereinstimmung mit einer Mehrzahl von Beförderung-Steuerbedingungen, welche für jeden Fahrmodus definiert sind, ein Rutschen eines Lenkrads durch Steuern wenigstens eines aus einem Motor und einem Bremssystem zu reduzieren, wenn ein Rutschbetrag des Lenkrads einen Eingriff-Schwellenwert überschreitet; und
eine adaptive Geschwindigkeit-Steuereinheit (15), welche dazu eingerichtet ist, in Übereinstimmung mit einer Mehrzahl adaptiver Geschwindigkeit-Steuerbedingungen, welche für jeden Fahrmodus definiert sind, eine adaptive Geschwindigkeitssteuerung durchzuführen, welche das Fahrzeug dazu veranlasst, einem vorangehenden Fahrzeug zu folgen,
wobei die Mehrzahl von Fahrmodi umfasst:
einen ersten Modus, in welchem wenigstens einer aus einem Beförderung-Steuerbetrag und einem Eingriff-Schwellenwert des Rutschbetrags, welche in der Beförderung-Steuerbedingung definiert sind, ein Standardwert ist und wenigstens eines aus dem Motordrehmoment und der Bremskraft, welche in der adaptiven Geschwindigkeit-Steuerbedingung definiert sind, ein Standardwert ist; und
wenigstens einen Fahrmodus, welcher die zu dem ersten Modus unterschiedliche Beförderung-Steuerbedingung aufweist,
wobei der wenigstens eine Fahrmodus eine Mehrzahl von Fahrmodi umfasst,
**dadurch gekennzeichnet, dass** die Mehrzahl von Fahrmodi einen vierten Modus umfasst, in welchem der Eingriff-Schwellenwert des Rutschbetrags der Beförderung-Steuerbedingung größer als der in dem ersten Modus festgelegt ist; und
wobei, wenn sich der Fahrmodus ändert, die adaptive Geschwindigkeit-Steuereinheit die adaptive Geschwindigkeitssteuerung durch Ändern einer adaptiven Geschwindigkeit-Steuerbedingung durchführt, welche in der Mehrzahl adaptiver Geschwindigkeit-Steuerbedingungen umfasst ist, um dem Fahrmodus nach einer Änderung zu entsprechen, wobei die adaptive Geschwindigkeit-Steuerbedingung des vierten Modus derart festgelegt ist, dass wenigstens eines aus einem Betrag und einer Anstiegsrate des Motordrehmoments größer als das in dem ersten Modus festgelegt ist.

## Revendications

1. Appareil d'aide à la conduite (10) comprenant :
un dispositif de détermination de mode de déplacement (11) configuré pour déterminer un mode de déplacement devant être appliqué parmi une pluralité de modes de déplacement conformément à un mode de sélection par un conducteur d'un véhicule ;
un dispositif de commande de traction (12) configuré pour réduire le patinage d'une roue motrice en commandant au moins un parmi un moteur et un système de freinage conformément à une pluralité de conditions de commande de traction définies pour chaque mode de déplacement, lorsque la quantité de patinage de la roue motrice dépasse un seuil d'intervention ; et
un régulateur de vitesse adaptatif (15) configuré pour réaliser une régulation de vitesse adaptative qui amène le véhicule à suivre un véhicule précédent conformément à une pluralité de conditions de régulation de vitesse adaptative définies pour chaque mode de déplacement,
dans lequel la pluralité de modes de déplacement comprend :
un premier mode dans lequel au moins un parmi une quantité de commande de traction et un seuil d'intervention de la quantité de patinage définis dans la condition de commande de traction est une valeur par défaut, et au moins un parmi le couple moteur et la force de freinage définis dans la condition de régulation de vitesse adaptative est une valeur par défaut ; et
au moins un mode de déplacement qui a la condition de commande de traction différente du premier mode,
dans lequel l'au moins un mode de déplacement comprend une pluralité de modes de déplacement,
**caractérisé en ce que** la pluralité de modes de déplacement comprennent un deuxième mode dans lequel le seuil d'intervention de la quantité de patinage par rapport à la force de freinage dans la condition de commande de traction est réglé pour être plus faible que celui du premier mode ; et
dans lequel, lorsque le mode de déplacement est changé, le régulateur de vitesse adaptatif (15) réalise le régulation de vitesse adaptative en changeant une condition de régulation de vitesse adaptative comprise dans la pluralité de conditions de régulation de vitesse adaptative de manière à ce qu'elle corresponde au mode de déplacement après le changement, la condition de régulation de vitesse adaptative du deuxième mode est réglée de manière à ce que le couple moteur au démarrage soit réglé pour être plus faible que celui du premier mode, et un rythme d'augmentation du couple moteur est réglé pour être plus élevé que celui du premier mode lorsqu'une vitesse de véhicule est égale ou supérieure à une vitesse prédéterminée.

2. Appareil d'aide à la conduite (10) selon la revendication 1, dans lequel, dans la condition de régulation de vitesse adaptative du deuxième mode,
une distance inter-véhicules entre le véhicule et le véhicule précédent est réglée pour être plus élevée que celle du premier mode, et
un moment d'activation du système de freinage du véhicule est réglé pour être plus précoce que celui du premier mode.

3. Appareil d'aide à la conduite (10) comprenant :
un dispositif de détermination de mode de déplacement (11) configuré pour déterminer un mode de déplacement devant être appliqué parmi une pluralité de modes de déplacement conformément à un mode de sélection par un conducteur d'un véhicule ;
un dispositif de commande de traction (12) configuré pour réduire le patinage d'une roue motrice en commandant au moins un parmi un moteur et un système de freinage conformément à une pluralité de conditions de commande de traction définies pour chaque mode de déplacement, lorsque la quantité de patinage de la roue motrice dépasse un seuil d'intervention ; et
un régulateur de vitesse adaptatif (15) configuré pour réaliser une régulation de vitesse adaptative qui amène le véhicule à suivre un véhicule précédent conformément à une pluralité de conditions de régulation de vitesse adaptative définies pour chaque mode de déplacement,
dans lequel la pluralité de modes de déplacement comprend :
un premier mode dans lequel au moins un parmi une quantité de commande de traction et un seuil d'intervention de la quantité de patinage définis dans la condition de commande de traction est une valeur par défaut, et au moins un parmi le couple moteur et la force de freinage définis dans la condition de régulation de vitesse adaptative est une valeur par défaut ; et
au moins un mode de déplacement qui a la condition de commande de traction différente du premier mode,
dans lequel l'au moins un mode de déplacement comprend une pluralité de modes de déplacement,
**caractérisé en ce que** la pluralité de modes de déplacement comprennent un troisième mode dans lequel une réduction de couple du moteur par le dispositif de commande de traction est limitée ou interdite et la force de freinage de la condition de commande de traction est réglée pour être plus élevée que celle du premier mode ; et
dans lequel, lorsque le mode de déplacement est changé, le régulateur de vitesse adaptatif (15) réalise la régulation de vitesse adaptative en changeant une condition de régulation de vitesse adaptative comprise dans la pluralité de conditions de régulation de vitesse adaptative de manière à ce qu'elle corresponde au mode de déplacement après le changement, la condition de régulation de vitesse adaptative du troisième mode est réglée de manière à ce que le couple moteur au démarrage dans la condition de régulation de vitesse adaptative dans le troisième mode soit réglé pour être plus élevé que celui du premier mode.

4. Appareil d'aide à la conduite (10) selon la revendication 3, dans lequel,
lorsqu'un état de blocage est détecté dans la régulation de vitesse adaptative dans le troisième mode, le couple moteur augmente progressivement, et
lorsque la détection de l'état de blocage continue pendant une durée prédéterminée, la régulation de vitesse adaptative est arrêtée et une notification est émise pour inviter le conducteur à réaliser une opération de conduite.

5. Appareil d'aide à la conduite (10) selon l'une quelconque de la revendication 3 ou de la revendication 4, dans lequel :
le couple moteur au démarrage dans la condition de régulation de vitesse adaptative dans le troisième mode est réglé pour être plus élevé que celui du premier mode ;
l'au moins un mode de déplacement comprend une pluralité de modes de déplacement, la pluralité de modes de déplacement comprennent un quatrième mode dans lequel le seuil d'intervention de la quantité de patinage de la condition de commande de traction est réglé pour être plus élevé que celui du premier mode ; et
la quantité du couple moteur au démarrage dans la condition de régulation de vitesse adaptative dans le troisième mode est réglée pour être plus faible que celle du quatrième mode.

6. Appareil d'aide à la conduite (10) comprenant :
un dispositif de détermination de mode de déplacement (11) configuré pour déterminer un mode de déplacement devant être appliqué parmi une pluralité de modes de déplacement conformément à un mode de sélection par un conducteur d'un véhicule ;
un dispositif de commande de traction (12) configuré pour réduire le patinage d'une roue motrice en commandant au moins un parmi un moteur et un système de freinage conformément à une pluralité de conditions de commande de traction définies pour chaque mode de déplacement, lorsque la quantité de patinage de la roue motrice dépasse un seuil d'intervention ; et
un régulateur de vitesse adaptatif (15) configuré pour réaliser une régulation de vitesse adaptative qui amène le véhicule à suivre un véhicule précédent conformément à une pluralité de conditions de régulation de vitesse adaptative définies pour chaque mode de déplacement,
dans lequel la pluralité de modes de déplacement comprend :
un premier mode dans lequel au moins un parmi une quantité de commande de traction et un seuil d'intervention de la quantité de patinage définis dans la condition de commande de traction est une valeur par défaut, et au moins un parmi le couple moteur et la force de freinage définis dans la condition de régulation de vitesse adaptative est une valeur par défaut ; et
au moins un mode de déplacement qui a la condition de commande de traction différente du premier mode,
dans lequel l'au moins un mode de déplacement comprend une pluralité de modes de déplacement,
**caractérisé en ce que** la pluralité de modes de déplacement comprennent un quatrième mode dans lequel le seuil d'intervention de la quantité de patinage de la condition de commande de traction est réglé pour être plus élevé que celui du premier mode ; et
dans lequel, lorsque le mode de déplacement est changé, le régulateur de vitesse adaptatif réalise la régulation de vitesse adaptative en changeant une condition de régulation de vitesse adaptative comprise dans la pluralité de conditions de régulation de vitesse adaptative de manière à ce qu'elle corresponde au mode de déplacement après le changement, la condition de régulation de vitesse adaptative du quatrième mode est réglée de manière à ce qu'au moins un parmi une quantité et un rythme d'augmentation du couple moteur soit réglé pour être plus élevé que celui du premier mode.
